# EUROPEAN PATENT SPECIFICATION

(11) **EP 0 416 184 B1**
(45) Date of publication and mention of the grant of the patent: **15.09.1993**
(21) Application number: 89309149.6
(22) Date of filing: 08.09.1989
(51) Int. Cl.: B01D 21/24

(54) **Muddy water processing apparatus**
Apparat zur Behandlung von Schlammwasser
Appareil pour le traitement des eaux boueuses

(43) Date of publication of application: 13.03.1991
(73) Proprietor: Kabushiki Kaisha Iseki Kaihatsu Koki, Shibuya-ku Tokyo (JP)
(72) Inventor: Akesaka, Toshio, Yokohama-shi Kanagawa-ken (JP)
(74) Representative: Woodward, John Calvin

(56) References cited:
- DE-A- 1 484 832
- DE-A- 1 708 594
- DE-A- 3 145 958
- DE-A- 3 535 260
- FR-A- 377 251
- GB-A- 2 014 866
- US-A- 2 461 814

## Description

This invention relates to a muddy water processing apparatus for settling down the particulate matter contained in muddy water and then removing the settled particulate matter and, more particularly, to a processing apparatus suitably used for the processing of muddy water produced by the execution of a tunnelling operation, a boring operation, a pile driving operation and an operation of removing sedimentary earth from a dam or the like.

A conventional processing method for removing particulate matter such as sand from muddy water comprises the steps of guiding the muddy water containing the particulate matter to a sedimentation tank, settling down the particulate matter in the sedimentation tank, and then scooping out the particulate matter settled down on the bottom of the sedimentation tank from the sedimentation tank by the use of a back hoe and a clamshell or the like.

However, according to this conventional method, since a large quantity of water is drained out together with the particulate matter, and thus the scooped particulate matter contains a large quantity of water, it is necessary to separate the scooped particulate matter and water from each other by a solid-liquid separator.

An apparatus suitable for handling muddy water is disclosed in DE-A-3145958.

It is an object of the present invention to provide a muddy water processing apparatus, in which water drained out of a tank together with particulate matter is small in quantity.

DE-A-1484832 discloses an apparatus for processing muddy water containing particulate matter, comprising: a tank for receiving said muddy water; and takeout means receiving said particulate matter settling in said tank and then conveying the received particulate matter to an upper portion of said tank; wherein said takeout means includes a belt conveyor provided with a first conveyance section disposed at the bottom of said tank and receiving said particulate matter to convey the received particulate matter to a predetermined portion of said tank, and a second conveyance section including a pair of endless belts for conveying sandwiched therebetween the particulate matter conveyed by said first conveyance section upward in said tank.

According to the present invention, there is provided an apparatus for processing muddy water as hereinbefore defined and characterised by conveying means provided with a belt conveyor for receiving the particulate matter conveyed to the upper portion of the tank by the takeout means and then conveying the received particulate matter to the outside of the tank, the belt conveyor having a conveyance surface extending obliquely upward across the tank and being arranged such that water separating from the particulate matter thereon drains from the lower end thereof back into the tank.

The particulate matter contained in the muddy water supplied into the tank is deposited on the first conveyance section, then conveyed to a predetermined portion in the tank by the first conveyance section and thereafter conveyed to an upper portion of the tank by the second conveyance section.

According to the present invention, since the second conveyance section conveys the particulate matter while sandwiching the particulate matter between a pair of endless belts, water drained out together with the particulate matter is smaller in quantity than that in the case where the particulate matter is scooped out from the tank by a back hoe and a clamshell or the like, so that it is not necessary to separate the discharged particulate matter and water from each other by a solid-liquid separator.

As the belt conveyor used in the present invention, use can be made of a conveyor defining an L-shaped conveyance route consisting of a first endless belt having a first portion extending from one end to the other end of the tank along the bottom thereof so as to define the first conveyance section and a second portion extending upward from the bottom at the other end of the tank, and a second endless belt having a portion extending upward from the bottom at the other end of the tank so as to define the second conveyance section in cooperation with the second portion of the first endless belt.

In this case, the first endless belt may be disposed to circulate through a first pulley disposed at one end of the bottom so as to extend along the bottom of the tank, a second pulley disposed at the other end of the bottom so as to extend in parallel with the first pulley, a third pulley disposed above the tank so as to extend in parallel with the second pulley and a fourth pulley disposed so as to extend in parallel with the second pulley in a position slightly above the second pulley. Further, the second endless belt may be disposed to circulate through the fourth pulley and a fifth pulley disposed above the tank so as to extend in parallel with the third pulley.

The particulate matter conveyed to the upper portion of the tank by the takeout means is conveyed to the outside of the tank by the conveyance means. A belt conveyor is used for the conveyance means and receives the particulate matter, conveyed to the upper portion of the tank by the takeout means, and then conveys the particulate matter along the conveyance surface extending obliquely upward.

The particulate matter is conveyed obliquely upward by the belt conveyor, while water contained in the particulate matter flows downward along the conveyance surface, so that water drained out together with the particulate matter becomes smaller in quantity.

Further, by disposing a filter rising from the lower end of the conveyance surface, which prevents the passage of particulate matter received on the conveyance surface of the conveyance means but permits the passage of water, the particulate matter to be conveyed may be prevented from reversely flowing into the tank together with water flowing downward along the conveyance surface.

As the filter, use can be made of a louver-like filter including a pair of first plate members confronting each other to extend in the vertical direction, and a plurality of second plate members disposed between the first plate members at intervals in the vertical direction and inclined so that one end of each second plate member in the width direction is located above the other end thereof. In this case, the filter is disposed so that one end of the filter is located on the rear side in the conveying direction of the particulate matter, while the other end is located on the front side.

If the tank is provided with an inlet port for the muddy water and an outlet port for the muddy water in the tank, the muddy water can be processed continuously.

In the muddy water processing apparatus of the present invention, it is preferable to dispose a plurality of plate-like guides for guiding the particulate matter contained in the muddy water to the first conveyance section and means for defining a muddy water flow path in the tank so as to move the muddy water flowing from an inlet port into the tank downward from the upper portion and then move the muddy water upward from the lower portion.

The foregoing and other objects and features of the invention will become apparent from the following description of preferred embodiments of the invention with reference to the accompanying drawings, in which:
Figure 1 is a longitudinal sectional view showing an embodiment of a processing apparatus according to the present invention;
Figure 2 is a plan view showing the processing apparatus of Figure 1;
Figure 3 is an enlarged-scale sectional view taken along a line 3-3 in Figure 1;
Figure 4 is an enlarged-scale sectional view taken along a line 4-4 in Figure 1;
Figure 5 is an enlarged-scale sectional view taken along a line 5-5 in Figure 1;
Figure 6 is a sectional view similar in position to Figure 5, but showing the case where another pulley is used;
Figure 7 is a perspective view showing an embodiment of a filter; and
Figure 8 is a longitudinal sectional view showing another embodiment of the processing apparatus.

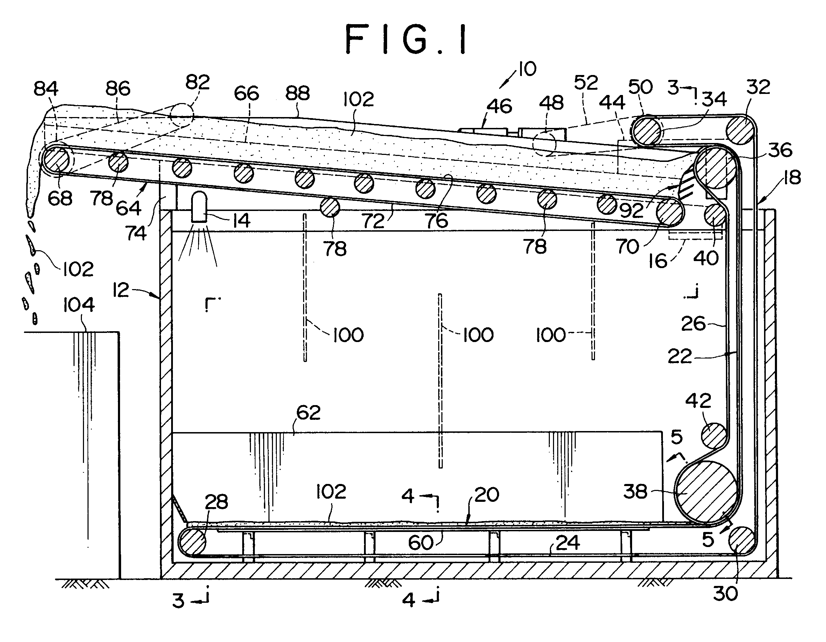

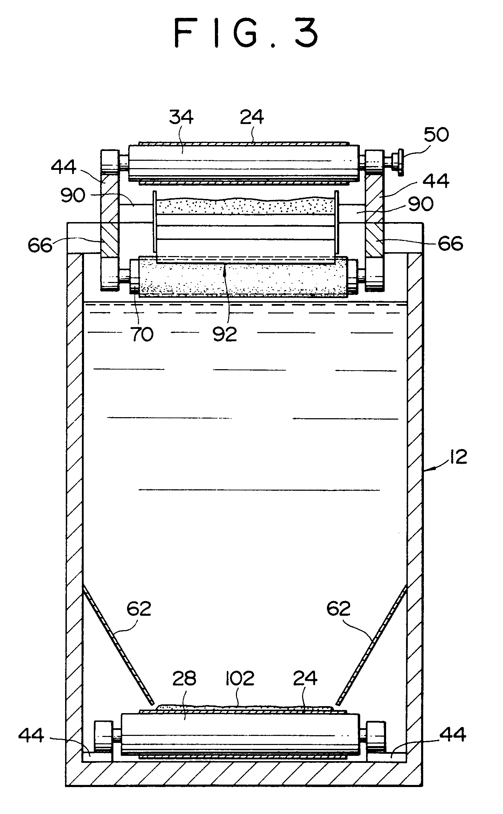

As shown in Figures 1 through 4, a muddy water processing apparatus 10 comprises an upwardly opening rectangular parallelepiped-like sedimentation tank 12. The sedimentation tank 12 is provided with an inlet port 14 for the muddy water and an outlet port 16 for the muddy water in the tank 12. In the illustrated embodiment, the inlet port 14 is defined by a pipe for supplying muddy water from above to one end portion of the sedimentation tank 12 in the longitudinal direction. On the contrary, the outlet port 16 is defined by a hole bored in one side wall of the sedimentation tank in the width direction and a chute continuously extending from the hole.

The processing apparatus 10 further comprises a takeout mechanism 18 provided in the sedimentation tank 12 for conveying the particulate matter to the portion above the tank. The takeout mechanism 18 includes a belt conveyor provided with a pair of endless belts 24, 26 defining a first conveyance section 20 receiving the particulate matter settling down in the sedimentation tank 12 and then conveying the settled particulate matter along the bottom of the sedimentation tank 12 to a predetermined portion and a second conveyance section 22 for further conveying upward the particulate matter conveyed by the first conveyance section 20 from the bottom of the sedimentation tank 12.

In order to define the first and second conveyance sections 20, 22, the endless belt 24 is disposed so as to circulate through a pulley 28 disposed at one end of the bottom so as to extend along the bottom in the width direction of the sedimentation tank 12, a pulley 30 disposed at the other end of the bottom so as to extend in parallel with the pulley 28, pulleys 32, 34, 36 disposed above the sedimentation tank 12 so as to extend in parallel with the pulley 30, and a pulley 38 disposed so as to extend in parallel with the pulley 30 in a position slightly obliquely above the pulley 30.

On the other hand, in order to define the second conveyance section 22 together with the endless belt 24, the endless belt 26 is disposed so as to circulate through the pulleys 36, 38 and pulleys 40, 42 disposed between the pulleys 36, 38 at an interval in the vertical direction. Respective portions of the endless belts 24, 26 between the pulleys 36, 38 are overlapped each other so as to convey the particulate matter while sandwiching the particulate matter between the overlapped belt portions.

Respective pulleys 28, 30, 32, 34, 36, 38, 40 and 42 are supported by a plurality of supports 44 fixed on the sedimentation tank 12, respectively. A drive mechanism 46 of the takeout mechanism 18 is supported by the support 44 for supporting the pulleys 32, 34 and 36. The rotation of the drive mechanism 46 is transmitted to the endless belt 24 through a sprocket 48 mounted on a rotary shaft of the drive mechanism, a sprocket 50 fixed on the pulley 34, around which the endless belt 24 is wound, and a chain 52 encircling both of the sprockets 48, 50.

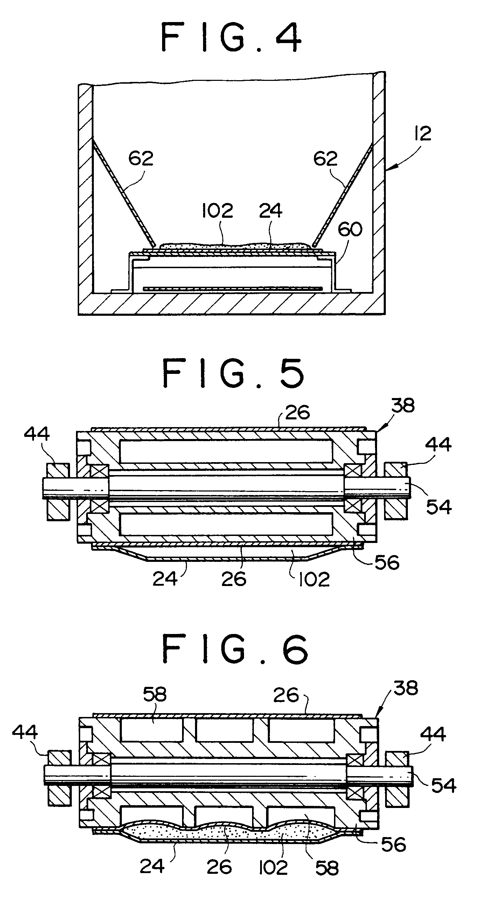

The pulley 38 has a diameter larger than that of each of the other pulleys. Further, as shown in Fig. 5, the pulley 38 is provided with a shaft 54 supported by the supports 44 and a roller 56 rotatably supported by the shaft. In the illustrated embodiment, the roller 56 has a cylindrical outer peripheral surface. A plurality of annular grooves 58 may be formed on the outer peripheral portion of the roller 56, as shown in Fig. 6.

A guide 60 for preventing the endless belt 24 from being bent in the first conveyance section 22 and a pair of guides 62 for guiding the particulate matter contained in the muddy water so as to settle down the particulate matter on the first conveyance section 22 are disposed on the bottom of the sedimentation tank 12.

The processing apparatus 10 further comprises a conveyance mechanism 64 for conveying the particulate matter conveyed to the portion above the sedimentation tank 12 by the takeout mechanism 18 to the outside of the sedimentation tank 12. The conveyance mechanism 64 is provided with a pair of frames 66 provided above the sedimentation tank 12 to extend in the longitudinal direction of the sedimentation tank 12, a pair of pulleys 68, 70 supported at respective opposite ends of the frames, and an endless belt 72 disposed so as to circulate through both of the pulleys 68, 70 in order that the endless belt 72 receives the particulate matter conveyed from the takeout mechanism 18 to convey the received particulate matter.

The pair of frames 66 are disposed at an interval in the width direction of the sedimentation tank 12 and mounted on the sedimentation tank 12 by the use of a plurality of fittings 74. The conveyance mechanism 64 is disposed so that the pulley 68 is located at a position higher than the pulley 70. Accordingly, the particulate matter conveyance surface 76 of the endless belt 72 is slightly inclined to a horizontal line. The inclination for preventing the particulate matter on the endless belt 72 from flowing toward the pulley 70 together with water will suffice for the inclination of the conveyance surface 76 relative to the horizontal line. For example, the inclination may be defined within the range from 3 to 15°, preferably 5 to 10°.

The frames 66 support a plurality of guide rollers 78 for preventing the endless belt 72 from being bent. A drive mechanism 80 of the conveyance mechanism 64 is supported to the frame 66. The rotation of the drive mechanism 80 is transmitted to the endless belt 72 through a sprocket 82 mounted on a rotary shaft of the drive mechanism 80, a sprocket 84 connected with the pulley 68 and a chain 86 encircling both of the sprockets 82, 84.

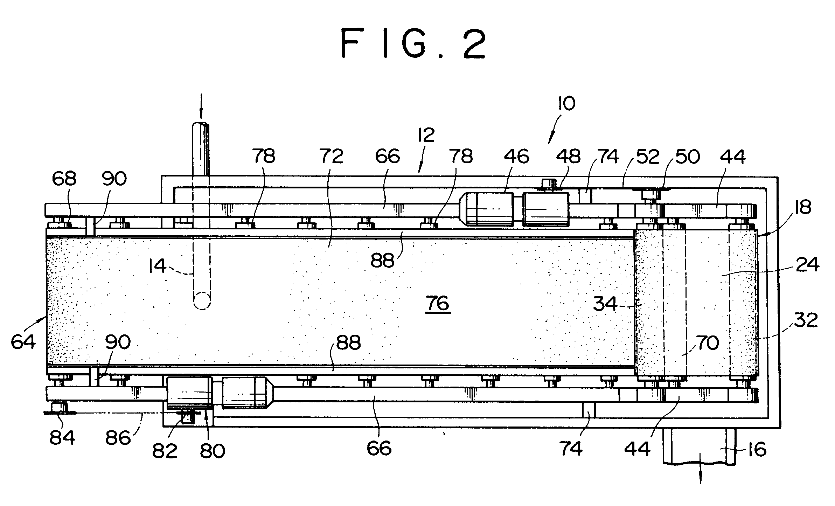

A pair of guide plates 88 are mounted on the respective frames 66 by the use of fittings 90 so as to extend along the both sides of the particulate matter conveyance surface 76 of the endless belt 72. As shown in Fig. 2, each of the guide plates 88 prevents the particulate matter from dropping out from the side of the endless belt 72 in the width direction.

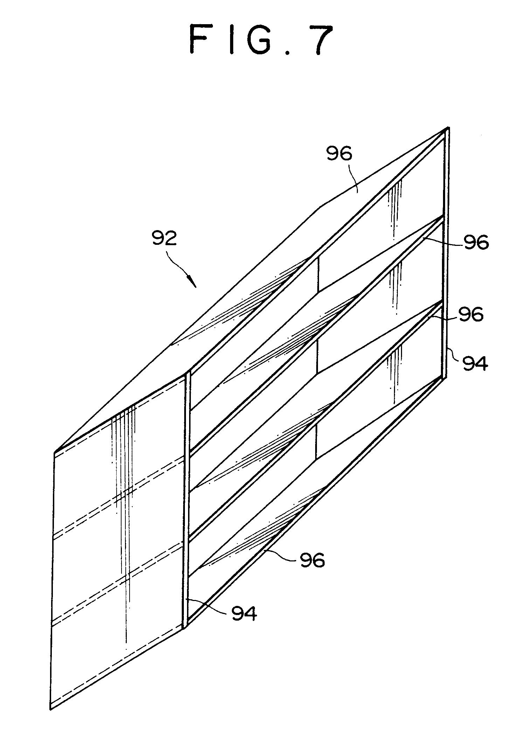

The conveyance mechanism 64 is further provided with a filter 92 preventing the passage of particulate matter received on the conveyance surface 76 of the endless belt 72 while permitting the passage of water. As shown in Fig. 7, the filter 92 takes the shape of a louver provided with a pair of plate members 94 confronting each other to extend in the vertical direction and a plurality of plate members 96 disposed between the plate members 94 at intervals in the vertical direction. Each of the plate members 96 is inclined so that one end of each plate member 96 in the width direction is located above the other end thereof. The filter 92 is fixed by the frames 66 such that one end of each plate member 96 as noted above is located on the rear side in the conveying direction of the particulate matter and the other end thereof is located on the front side.

The upper and lower edges of the filter 92 are respectively brought into contact with the endless belts 24 and 72. In consequence, the particulate matter to be conveyed by the endless belt 72 may be prevented from flowing down from the conveyance surface 76, while the particulate matter attached to the endless belt 26 may be scraped off to the conveyance mechanism 64.

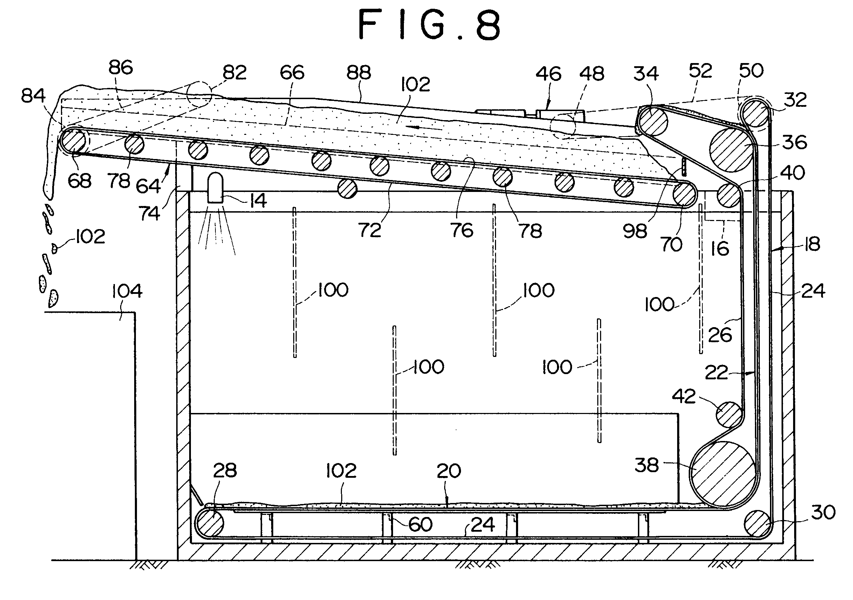

In the embodiment shown in Fig. 1, the takeout mechanism 18 is so constructed that the particulate matter is dropped out on a starting end of a conveyance route of the conveyance mechanism 64. However, as shown in Fig. 8, an upper portion of the endless belt 26 of the takeout mechanism 18 may be extended to the above of the conveyance mechanism 64 to drop out the particulate matter on the mid portion of the conveyance surface of the conveyance mechanism 64. In the case of the embodiment shown in Fig. 8, a plate member 98 for scraping off the particulate matter attached to the endless belt 26 onto the conveyance mechanism 64 may be provided instead of the filter 92.

In a muddy water processing apparatus as shown in Fig. 8, instead of the endless belt 24, the endless belt 26 is wound around the pulley 34. Further, the rotation of the drive mechanism 46 is transmitted to the endless belt 24 through the pulley 32.

Further, as shown by dotted lines in Figs. 1 and 8, one or more partition plates 100 for preventing the muddy water supplied from the inlet port 14 into the sedimentation tank 12 from directly reaching the outlet port 16 may be provided in the sedimentation tank 12. By so doing, the muddy water supplied from the inlet port 14 into the sedimentation tank 12 moves downward from the upper portion of the tank and then moves upward from the lower portion thereof.

In use, the takeout mechanism 18 and the conveyance mechanism 64 are operated during the processing of muddy water. The particulate matter such as earth and sand contained in the muddy water is settled down on the first conveyance section 20 of the takeout mechanism 18 while the muddy water flows inside the sedimentation tank 12 from the side of the inlet port 14 toward the outlet port 16.

The particulate matter 102 settled down on the first conveyance section 20 is conveyed toward the pulley 38 through the first conveyance section 20 by the endless belt 24 and then conveyed upward through the second conveyance section 22 while being sandwiched between the endless belts 24, 26.

When the particulate matter 102 is sandwiched between the endless belts 24, 26 in the second conveyance section 22 as shown in Fig. 5, the muddy water survived in the particulate matter 102 is squeezed from the particulate matter. Accordingly, the particulate matter 102 conveyed through the second conveyance section 22 is low in water content. The use of the pulley 38 as shown in Fig. 6 is more effective in squeezing the muddy water from the interstices of the particulate matter, so that the particulate matter 102 conveyed through the second conveyance section 22 becomes lower in water content.

The precipitate conveyed above the sedimentation tank 12 by the takeout mechanism 18 is discharged from the takeout mechanism 18 to the conveyance mechanism 64, and thereafter discharged by the conveyance mechanism 64 to a receiver 104 such as a hopper disposed outside the sedimentation tank 12 and a transportation vehicle.

Water remaining in the particulate matter 102 conveyed to the conveyance mechanism 64 flows downward along the conveyance surface 76 of the conveyance mechanism 64, when conveyance is done by the conveyance mechanism 64, to thereby drop out into the sedimentation tank 12 through the filter 92. Accordingly, the particulate matter 102 conveyed to the receiver 104 such as a hopper becomes lower in water content.

Since the water drained out from the takeout mechanism 18 to the conveyance mechanism 64 is small in quantity, water flowing along the conveyance surface 76 is not so much in quantity as to make the particulate matter 102 on the conveyance surface 76 flow downward. Further, since each plate member 96 of the filter 92 is inclined reversely to the conveyance surface 76 of the conveyance mechanism 64, the particulate matter on the conveyance surface 76 is not caused by the water passing through the filter 92 to flow into the sedimentation tank 12 through the filter 92.

Namely, in order to drop out the particulate matter 102 on the conveyance surface 76 into the sedimentation tank 12 through the space between the adjacent plate members 96 of the filter 92, water is necessary in sufficient quantity as to fluidize the particulate matter 102 in the space between the adjacent plate members 96. However, since the water drained out from the takeout mechanism 18 to the conveyance mechanism 64 is small in quantity, the water dropping out into the sedimentation tank 12 through the filter 92 is also small in quantity, so that the particulate matter on the conveyance surface 76 is not possible to flow into the sedimentation tank 12 through the filter 92.

The conveyance speed of the conveyance mechanism 64 is preferably set to a value slower than the speed of the takeout mechanism 18, particularly to a value within the range from one half to one tenth of the speed of the takeout mechanism. By so doing, the particulate matter 102 may be stayed on the conveyance surface 76 for a long time and a large quantity of water flows toward the filter 92 along the conveyance surface 76 during a period of time when the particulate matter is stayed on the conveyance surface, so that it is largely effective in draining off water in the conveyance mechanism 64 and the particulate matter 102 received in the receiver 104 becomes lower in water content.

## Claims

1. An apparatus for processing muddy water containing particulate matter, comprising: a tank (12) for receiving said muddy water; and takeout means (18) receiving said particulate matter settling in said tank and then conveying the received particulate matter to an upper portion of said tank; wherein said takeout means (18) includes a belt conveyor provided with a first conveyance section (20) disposed at the bottom of said tank (12) and receiving said particulate matter to convey the received particulate matter to a predetermined portion in said tank (12), and a second conveyance section (26) including a pair of endless belts (24, 26) for conveying sandwiched therebetween the particulate matter conveyed by said first conveyance section (20) upward in said tank (12)
**characterised by,**
conveying means (64) provided with a belt conveyor for receiving the particulate matter conveyed to the upper portion of said tank (12) by said takeout means (18) and then conveying the received particulate matter to the outside of the tank (12), said belt conveyor having a conveyance surface (76) extending obliquely upward across the tank (12) and being arranged such that water separating from the particulate matter thereon drains from the lower end thereof back into the tank (12).

2. An apparatus according to claim 1, wherein it further comprises a filter (92,98) disposed so as to rise from a lower end of said conveyance surface (76), said filter (92,98) preventing the passage of said said particulate matter received on said conveyance surface (76) but permitting the passage of water.

3. An apparatus according to claim 2, wherein said filter (92) includes a pair of first plate members (94) confronting each other to extend in the vertical direction and a plurality of second plate members (96) disposed between said first plate members (94) at intervals in the vertical direction and inclined so that one end of each second plate member (96) in the width direction is located above the other end thereof, and said filter (92) is disposed so that said one end of each second plate member (94) is located toward the rear side in the conveying direction of said particulate matter and said other end is located toward the front side.

4. An apparatus according to claim 1, 2 or 3, wherein said tank (12) has an inlet port (14) for said muddy water, an outlet port (16) for processed water.

5. An apparatus according to claim 4, wherein it further comprises a pair of guides (62) disposed in said tank (12) so as to guide the particulate matter settling down in said tank (12) to said first conveyance section (20).

6. An apparatus according to any preceding claim, wherein said belt conveyor includes a first endless belt (24) having a first portion extending from one end to the other end of said tank (12) along the bottom thereof so as to define said first conveyance section (20), and a second portion extending upward from said bottom at said other end, and a second endless belt (26) having a portion extending upward from said bottom at said other end so as to define said second conveyance section (22) in cooperation with said second portion of said first endless belt.

7. An apparatus according to claim 6, wherein said first endless belt (24) is disposed so as to circulate through a first pulley (28) disposed at one end of said bottom so as to extend along the bottom of said tank (12), a second pulley (30) disposed at the other end of said bottom so as to extend in parallel with said first pulley (28), a third pulley (32) disposed above said tank (12) so as to extend in parallel with said second pulley (30) and a fourth pulley (38) disposed so as to extend in parallel with said second pulley (30) in a position slightly above said second pulley (30), and said second endless belt (26) is disposed so as to circulate through said fourth pulley (38) and a fifth pulley disposed above said tank (12) so as to extend in parallel with said third pulley (32).

8. An apparatus according to any preceding claim, wherein it further comprises means (100) for defining a flow passage of said muddy water in said tank (12) so that the muddy water supplied from said inlet port (14) into said tank (12) moves downward from the upper portion of said tank (12) and then moves upward from the lower portion thereof.

## Patentansprüche

1. Vorrichtung zum Verarbeiten von Schmutzwasser, das teilchenförmiges Material enthalt, die aufweist:
einen Tank (12) zum Aufnehmen des Schmutzwassers und eine Abführeinrichtung (18), die das teilchenförmige Material, welches sich im Tank absetzt, aufnimmt und dann das aufgenommene teilchenförmige Material zu einem oberen Abschnitt des Tanks befördert, wobei die Abführeinrichtung (18) ein Förderband enthalt, das mit einem ersten Förderabschnitt (20) versehen ist, der am Boden des Tanks (12) angeordnet ist und das teilchenförmige Material aufnimmt, um das aufgenommene teilchenförmige Material zu einem vorgegebenen Abschnitt des Tanks (12) zu befördern, und das mit einem zweiten Förderabschnitt (26) versehen ist, der ein Paar Endlosbänder (24,26) zum Befördern des dazwischen geschichteten teilchenförmigen Materials enthält, das von dem ersten Förderabschnitt (20) im Tank (12) nach oben befördert wird,
gekennzeichnet durch
eine Fördereinrichtung (64), die mit einem Förderband versehen ist, zum Aufnehmen des teilchenförmigen Materials, das dem oberen Abschnitt des Tanks (12) durch die Abführeinrichtung (18) zugeführt wird, und dann zum Befördern des aufgenommenen teilchenförmigen Materials aus dem Tank (12) heraus, wobei das Förderband eine Förderoberfläche (76) hat, die schräg nach oben über den Tank (12) verläuft und so angeordnet ist, daß Wasser, das sich von dem teilchenförmigen Material auf ihr abscheidet, von ihrem unteren Ende zurück in den Tank (12) abläuft.

2. Vorrichtung gemäß Anspruch 1, wobei sie weiterhin einen Filter (92,98) aufweist, der so angeordnet ist, daß er sich von einem unteren Ende der Förderoberfläche (76) abhebt, wobei der Filter (92,98) den Durchlaß des teilchenförmigen Materials, das auf der Förderoberfläche (76) aufgenommen wird verhindert, aber den Durchlaß von Wasser gestattet.

3. Vorrichtung gemäß Anspruch 2, wobei der Filter (92) ein Paar erster Plattenteile (94), die einander gegenüberstehen und sich in der Vertikalrichtung erstrecken, und eine Mehrzahl von zweiten Plattenteilen (96) enthält, die zwischen den ersten Plattenteilen (94) in Abständen in der Vertikalrichtung und geneigt so angeordnet sind, daß ein Ende jedes zweiten Plattenteils (96) in der Breitenrichtung über seinem anderen Ende angeordnet ist, und wobei der Filter (92) so angeordnet ist, daß ein Ende jedes zweiten Plattenteils (94) in Richtung der Rückseite in der Förderrichtung des teilchenförmigen Materials angeordnet ist und daß das andere Ende in der Richtung der Vorderseite angeordnet ist.

4. Vorrichtung gemäß Anspruch 1, 2 oder 3, wobei der Tank (12) einen Einlaß (14) für das Schmutzwasser und einen Auslaß (16) für das verarbeitete Wasser hat.

5. Vorrichtung gemäß Anspruch 4, wobei sie weiterhin ein Paar Führungen (62) aufweist, die in dem Tank (12) angeordnet sind, so daß das teilchenförmige Material, das sich im Tank (12) absetzt, zum ersten Förderabschnitt (20) geführt wird.

6. Vorrichtung gemäß einem der vorhergehenden Ansprüche, wobei das Förderband ein erstes Endlosband (24) umfaßt, das einen ersten Abschnitt, welcher von einem Ende zu dem anderen Ende des Tanks (12) entlang seines Bodens verläuft, um den ersten Förderabschnitt (20) zu bilden, und einen zweiten Abschnitt hat, der an dem anderen Ende von dem Boden aus nach oben verläuft, und ein zweites Endlosband (26), das einen Abschnitt hat, der an dem anderen Ende vom Boden aus nach oben verläuft, um in Zusammenwirken mit dem zweiten Abschnitt des ersten Endlosbandes den zweiten Förderabschnitt (22) zu bilden.

7. Vorrichtung gemäß Anspruch 6, wobei das erste Endlosband (24) so angeordnet ist, daß es um eine erste Rolle (28) herum, die an einem Ende des Bodens so angeordnet ist, daß sie entlang des Bodens des Tanks (12) verläuft, um eine zweite Rolle (30) herum, die am anderen Ende des Bodens so angeordnet ist, daß sie parallel zur ersten Rolle (28) verläuft, um eine dritte Rolle (32) herum, die über dem Tank (12) so angeordnet ist, daß sie parallel zur zweiten Rolle (30) verläuft, und um eine vierte Rolle (38) herum umläuft, die so angeordnet ist, daß sie parallel zur zweiten Rolle (30) in einer Position etwas oberhalb der zweiten Rolle (30) verläuft, und wobei das zweite Endlosband (26) so angeordnet ist, daß es um die vierte Rolle (38) herum und um eine fünfte Rolle herum umläuft, die über dem Tank (12) so angeordnet ist, daß sie parallel zur dritten Rolle (32) verläuft.

8. Vorrichtung gemäß einem der vorhergehenden Ansprüche, wobei sie weiterhin eine Einrichtung (100) zum Bilden einer Flußpassage des Schmutzwassers im Tank (12) aufweist derart, daß sich das Schmutzwasser, das vom Einlaß (14) aus in den Tank (12) hinein zugeführt wird, vom oberen Abschnitt des Tanks (12) aus nach unten bewegt und dann von seinem unteren Abschnitt aus nach oben bewegt.

## Revendications

1. Appareil de traitement d'eau boueuse contenant de la matière particulaire, comprenant : un bassin (12) de réception de ladite eau boueuse ; et des moyens de prélèvement (18) qui reçoivent ladite matière particulaire se déposant dans ledit bassin et qui ensuite transportent la matière particulaire reçue vers une partie supérieure dudit bassin ; lesdits moyens de prélèvement (18) comprenant un transporteur à courroie comprenant une première section de transport (20) disposée sur le fond dudit bassin (12) et recevant ladite matière particulaire pour transporter la matière particulaire reçue vers une partie prédéterminée dudit bassin (12), et une seconde section de transport (26) comprenant deux courroies sans fin (24, 26) destinée à transporter vers le haut dans ledit bassin (12) la matière particulaire transportée par ladite première section de transport (20), de manière qu'elle soit enserrée entre elles, caractérisé par des moyens de transport (64) constitués d'un transporteur à courroie destiné à recevoir la matière particulaire transportée vers la partie supérieure dudit bassin (12) par lesdits moyens de prélèvement (18) et pour transporter ensuite la matière particulaire reçue vers l'extérieur du bassin (12), ledit transporteur à courroie comportant une surface de transport (76) orientée obliquement vers le haut en travers du bassin (12) et étant conçue de manière que l'eau se séparant de la matière particulaire se trouvant sur elle s'évacue de son extrémité inférieure pour retourner dans ledit bassin (12).

2. Appareil selon la revendication 1, comprenant par ailleurs un filtre (92, 98) disposé de manière à s'élever d'une extrémité inférieure de ladite surface de transport (76), ledit filtre (92, 98) empêchant le passage de ladite matière particulaire reçue sur ladite surface de transport (76), mais autorisant le passage de l'eau.

3. Appareil selon la revendication 2, dans lequel ledit filtre (92) comprend deux premiers éléments en plaque (94) disposés en face l'un de l'autre et orientés en direction verticale, ainsi que plusieurs seconds éléments en plaque (96) disposés entre lesdits premiers éléments en plaque (94) à intervalles dans la direction verticale et inclinés de manière qu'une extrémité de chaque second élément de plaque (96) en direction de la largeur soit située au-dessus de son autre extrémité, et ledit filtre (92) étant disposé de manière que ladite une extrémité de chacun desdits seconds éléments en plaque (94) soit placée vers le côté arrière dans le sens de transport de ladite matière particulaire et de manière que ladite autre extrémité soit placée vers le côté antérieur.

4. Appareil selon la revendication 1, 2 ou 3, dans lequel ledit bassin (12) comporte un orifice (14) d'admission de ladite eau boueuse et un orifice (16) d'évacuation de l'eau traitée.

5. Appareil selon la revendication 4, comprenant par ailleurs deux guides (62) disposés dans ledit bassin (12) de manière à guider la matière particulaire se déposant dans ledit bassin (12) vers ladite première section de transport (20).

6. Appareil selon l'une quelconque des revendications précédentes, dans lequel ledit transporteur à courroie comprend une première courroie sans fin (24) dont une première partie va d'une extrémité à l'autre extrémité dudit bassin (12) le long de son fond de manière à constituer ladite première section de transport (20) et une seconde partie orientée vers le haut sur ledit fond à ladite autre extrémité, ainsi qu'une seconde courroie sans fin (26) dont une partie est orientée vers le haut depuis ledit fond à ladite autre extrémité de manière à constituer ladite seconde section de transport (22) en coopération avec ladite seconde partie de ladite première courroie sans fin.

7. Appareil selon la revendication 6, dans lequel ladite première courroie sans fin (24) est disposée de manière à passer sur une première poulie (28) disposée à une extrémité dudit fond de manière à être orientée le long du fond dudit bassin (12), une deuxième poulie (30) disposée à l'autre extrémité dudit fond de manière à être orientée parallèlement à ladite première poulie (28), une troisième poulie (32) disposée au-dessus dudit bassin (12) de manière à être orientée parallèlement à ladite deuxième poulie (30) et une quatrième poulie (38) disposée de manière à être orientée parallèlement à ladite deuxième poulie (30) en un emplacement situé légèrement au-dessus de ladite deuxième poulie (30), et ladite seconde courroie sans fin (36) est disposée de manière à passer sur ladite quatrième poulie (38) et une cinquième poulie disposée au-dessus dudit bassin (12) de manière à être orientée parallèlement à ladite troisième poulie (32).

8. Appareil selon l'une quelconque des revendications précédentes, comprenant par ailleurs des moyens (100) destinés à délimiter un passage d'écoulement de ladite eau boueuse dans ledit bassin (12) de manière que l'eau boueuse arrivant par ledit orifice d'admission (14) dans ledit bassin (12) se déplace de la partie supérieure dudit bassin (12) vers le bas et ensuite se déplace de la partie inférieure de ce dernier vers le haut.
